# EUROPÄISCHE PATENTSCHRIFT

(11) **EP 2 884 832 B1**
(45) Veröffentlichungstag und Bekanntmachung des Hinweises auf die Patenterteilung: **27.03.2019**
(21) Anmeldenummer: 13756817.6
(22) Anmeldetag: 13.08.2013
(51) Int. Cl.: A01D 33/04

(54) **TRENNVORRICHTUNG FÜR EINE KARTOFFELERNTEMASCHINE ODER EINE AUFBEREITUNGSMASCHINE**
SEPARATION SYSTEM FOR A POTATO HARVESTING MACHINE OR A PREPARATION MACHINE
DISPOSITIF DE TRIAGE POUR UNE MACHINE À RÉCOLTER LES POMMES DE TERRE OU POUR UNE MACHINE DE TRAITEMENT

(30) Priorität: 14.08.2012 DE 102012016057
(43) Veröffentlichungstag der Anmeldung: 24.06.2015
(73) Patentinhaber: Grimme Landmaschinenfabrik GmbH & Co. KG, 49401 Damme (DE)
(72) Erfinder: KALVERKAMP, Klemens, 49401 Damme (DE); DETTMER, Franz-Josef, 49577 Ankum (DE); DÖHMANN, Christian, 49594 Alfhausen (DE)
(74) Vertreter: Busse & Busse
(86) Internationale Anmeldenummer: PCT/EP2013/002447
(87) Internationale Veröffentlichungsnummer: WO 2014/026766

(56) Entgegenhaltungen:
- DE-B- 1 607 628
- DE-C- 747 316
- DE-C- 928 017
- DE-U1- 7 704 826
- US-A- 4 515 276

## Beschreibung

Die Erfindung betrifft eine Trennvorrichtung für eine Kartoffelerntemaschine oder eine Aufbereitungsmaschine für Hackfrüchte o. dgl. Erntegut gemäß dem Oberbegriff des Anspruchs 1.

Zum Trennen von Kartoffeln o. dgl. Erntegut aus einem Gemisch mit Kluten, Steinen und ähnlichen Festkörpern sind unterschiedliche Konzepte von Trennvorrichtungen bekannt, bei denen das Erntegemisch in einer Förderphase mittels eines zusätzlichen Luftstromes beeinflusst werden kann. In DE 747 316 wird eine Vorrichtung vorgeschlagen, die das Gemisch in einen Luftkanal lenkt, so dass in dessen Längserstreckung das Erntegut in Form von Kartoffeln weitergeleitet wird und die vergleichsweise schwereren Festkörper durch eine Bodenklappe ableitbar sind. Bei einer Vorrichtung gemäß DE 854 597 wird das Gemisch direkt mit einem Luftstrom beaufschlagt, so dass eine Sortierung der unterschiedlich schweren Bestandteile entsprechend einer Flugkurve erfolgt.

Die Konstruktionen gemäß DE 908 808 und DE 928 017 zeigen jeweilige Förderbänder, auf denen das Gemisch mittels eines tangentialen Luftstromes in die Einzelteile getrennt werden kann. Bei einer ähnlichen Konstruktion gemäß DE 1 607 628 wird eine Förderstrecke mittels jeweiliger zahnartig ineinandergreifende Konturen aufweisender Förderwalzen definiert, so dass ein dazu vertikaler Luftstrom eine Gemischtrennung bewirkt. Bei einem Steinauslesesystem gemäß DE 26 22 277 wird ein vibrierendes Gummiband genutzt, wobei auf dieses das Gemisch aufgebracht wird und dabei oberseitig die Knollen des Erntegutes unter Wirkung eines Luftstromes weitergefördert werden. Die vergleichsweise schwereren Steine o. dgl. Beimengungen können durch das Gummiband hindurchtreten und werden so vom Erntegut getrennt.

In DE 28 31 051 wird eine Kartoffelerntemaschine beschrieben, bei der ein düsenförmiges Gebläse auf ein Krautbestandteile ausförderndes Transportband gerichtet ist. Eine ähnliche Konstruktion zeigt DE 35 29 416, wobei unterhalb der Zuförderung des Gemisches ein Gebläse auf das Sortierband gerichtet ist. In DE 77 04 826 ist ebenfalls ein das Gemisch aufnehmendes Förderband vorgesehen, wobei entgegen dessen Förderrichtung ein die Trennung bewirkendes Gebläse ausgerichtet ist. Bei den Lösungen gemäß DD 3516, DD 206 884 und DD 210 847 sind jeweilige mehrstufige Trennvorrichtungen für Hackfrüchte vorgesehen, die in einer Sortierphase mit einem Luftstrom zusammenwirken. Gemäß EP 0 613 615 wird das fallende Gemisch einem Luftstrom so ausgesetzt, dass insbesondere Krautbestandteile in einen Aufnahmeschlitz zwischen zwei Transportwalzen gedrückt und die dabei vereinzelten Kartoffeln in Folge ihres Gewichts weiterbewegt werden.

Gemäß GB 636,100 wird ein an sich bekannter Blaskanal genutzt, in dem endseitig eine das Sortiergut ableitende Klappe vorgesehen ist und bei einer Lösung gemäß GB 711,984 wird die Belüftung so ausgerichtet, dass im Bereich einer kaskadenförmig angeordneten Konstruktion die Luftströmung zu jeweiligen Gefachen hin wirkt und diese mit unterschiedlichen Bestandteilen des dabei getrennten Gemisches gegefüllt werden. Eine gattungsgemäße Konstruktion ist in US 4,515,276 gezeigt, wobei ein Gemisch aus Erntegut und Steinen auf ein Gitter-Endlosförderband fallen und dabei ein zusätzlicher Hubluftstrom als Trennhilfe wirkt. Die Trennung der Teile erfolgt dadurch, dass im Bereich des Förderbandes ein Gravitations-Schichtungs-Prozess die schwereren von den leichteren Materialien löst und diese beiden "Schichten" durch eine "Rollbewegung" und eine Förderbandbewegung in verschiedene Richtungen ausförderbar sind.

Gemäß DD 204 829 ist eine Konstruktion vorgeschlagen, bei der das Erntegut aus dem Gemisch abgesaugt wird und in DD 217 400 werden die auf einem Förderband bewegten Gemischbestandteile mittels eines Sensorsystems klassifiziert und danach sortiert abgeleitet.

Die Erfindung befasst sich mit dem Problem, eine Trennvorrichtung für eine Kartoffelerntemaschine o. dgl. Maschinen zur Aufbereitung von Hackfrüchten zu schaffen, mittels der die Trennung des Erntegutes aus dem Gemisch mit höherer Durchsatzleistung erfolgt, dabei durch optimierbare Trennbedingungen ein von Verunreinigungen sowie Produktbeschädigungen freies Erntegut abförderbar ist und das System insgesamt eine Verringerung des Energieaufwandes ermöglicht.

Die Erfindung löst diese Aufgabe mit einer Trennvorrichtung mit den Merkmalen des Anspruchs 1. Weitere vorteilhafte Ausgestaltungen ergeben sich aus den Ansprüchen 2 bis 18.

Ausgehend von bekannten Trennvorrichtungen für gerodete Hackfrucht-Gemische in Kartoffelerntemaschinen oder ähnlichen Aufbereitungsmaschinen, bei denen das Erntegut-Festkörper-Gemisch bereits in einer Trennphase einem Luftstrom ausgesetzt wird, sieht das erfindungsgemäße Konzept eine als kompakte Funktionseinheit wirkende Vorrichtung mit zumindest zwei vorzugsweise von einem Gebläseaggregat erzeugten Luftströmen vor. Die Maschine bzw. Vorrichtung zeichnet sich in einer zentralen Trennstruktur dadurch aus, dass nachfolgend einer eine Auflockerung des Gemisches bewirkenden Fallstufe zumindest ein den fallenden Trenngütern entgegengerichtetes und mit dem zumindest einen Luftstrom zusammenwirkendes Rückhalteelement vorgesehen ist. Dieses das Fallen des Gemisches abbremsende und "anregende" Rückhalteelement kann an optimierbarer Position in den Gemisch-Förderweg integriert werden.

Im Bereich dieses Rückhaltelementes wird der zumindest eine Luftstrom so geführt, dass zumindest das Erntegut und die Festkörper - als jeweils sortierte Einzelteile - in jeweiligen diese im Wesentlichen entgegengesetzt verlagernden Förderrichtungen getrennt weiterleitbar sind.

Eine dazu vorgesehene funktionale Verknüpfung an sich bekannter Bauteile zur Förderung und Luftstromerzeugung führt im Bereich des Rückhalteelementes zu einer Trenneinheit, in deren Bereich das Rückhalteelement nach Art einer anregenden bzw. trennenden Förderplatte mit dem fallenden und sich im Luftstrom lockernden Gemisch zusammenwirkt. Für das zur Trennung zugeführte Gemisch wird damit oberhalb des der Luftströmung ausgesetzten Rückhalteelementes ein "fluidisches Trennbett" definiert. In diesem Bereich können die Einzelteile des Gemisches zumindest phasenweise eine "schwimmende" bzw. "schwebende" Anregungslage einnehmen und aus dieser heraus getrennt weitergeleitet werden.

Diese - unter Ausnutzung der Fallstufe bewirkte - Anregung kann durch die gezielte Einleitung der zumindest zwei Luftströme und/oder durch eine zusätzliche mechanische Aktivierung, beispielsweise mittels einer Schwingungsanregung im Bereich des Rückhalteelementes, noch verstärkt werden. Zur Trennung der Einzelteile wird der Effekt ausgenutzt, dass das Gemisch im "Trennbett" nach Art einer "Suspension" mit schwebenden Bestandteilen vorliegt. In dieser Phase kann die zusätzliche Luftströmung für einen die Schwerkraftwirkung überwindenden Fördereffekt genutzt werden, so dass die schweren Festkörper - insbesondere Steine - in eine Ausförderrichtung weitgehend nur durch den Rückprall vom Rückhalteelement bewegt werden und das vom Luftstrom stärker beeinflussbare Erntegut in einer dazu versetzten bzw. entgegengesetzten Richtung ausgefördert wird.

Dieser überraschend einfach erreichbare Effekt einer entgegengesetzten Verlagerung von Erntegut und Festkörpern kann dadurch optimiert werden, dass beispielsweise die Gebrauchslage bzw. Einbaulage des Rückhalteelementes variabel ausführbar ist. Auch eine mittels mehrerer Luftströme arbeitende Verfahrensführung - wobei die Luftströme "turbulent" oberhalb des anregbaren und anregenden Rückhalteelementes bzw. im hier erzeugten "fluidischen Trennbettes" wirken - kann für eine insbesondere an jeweilige unterschiedliche Strukturen des Gemisches angepasste Trennphase vorgesehen sein.

Die Erfindung besteht darin, dass im Bereich des Rückhalteelementes zwei Luftströme wirksam sind. Dabei ist vorgesehen, dass ein erster Luftstrom das Rückhalteelement durchströmt. Ein zweiter Luftstrom ist oberhalb einer oberen Trennfläche - im Bereich des "Trennbettes" - vorgesehen, wobei dieser Luftstrom einzeln oder gemeinsam mit dem ersten Luftstrom eingesetzt werden kann.

Die für das System zentrale Baugruppe im Bereich des Rückhalteelementes ist so konzipiert, dass hier zumindest ein die Lage und/oder die Bewegung des Rückhalteelementes beeinflussendes Stellorgan oder Stützorgan vorgesehen wird. Mit diesem Stellorgan kann die im Bereich des anregbaren Rückhalteelementes definierbare Trennstrecke bzw. das "Trennbett" variabel beeinflusst werden. Denkbar ist, dass durch eine Steuerung des Stellorgans eine an die jeweiligen Gemischzustände anpassbare Verfahrensführung realisiert wird.

Oberhalb des zumindest bereichsweise von einem der Luftströme durchströmbaren Rückhalteelementes kann konstruktiv eine Trennfläche mit variablen Abmessungen definiert werden, so dass diese zumindest phasenweise sowohl das Erntegut als auch die Festkörper in einem durch die Verfahrensbedingungen angeregten Lockerungszustand untergreift.

Als Vorteilhaft hat es sich herausgestellt, dass im Bereich des Rückhalteelementes zumindest oberhalb der Trennfläche insbesondere zwei mit unterschiedlichen Wirkrichtungen auf das Erntegut und die Festkörper ausrichtbare Luftströme vorgesehen sind. Diese können - in Bezug auf die Trennfläche - vorteilhaft in Form eines zu dieser senkrechten Hubluftstromes und eines Querluftstromes verlaufen. Eine optimale Wirkung auf das "angeregte Gemisch" erfolgt dann insbesondere in einer Zone, in der diese beiden Strömungen zusammentreffen.

Das vorbeschriebene Anregungs-Konzept bewirkt, dass mittels des Rückhalteelementes jeweils dem Erntegut eine zumindest in die eine Sortier-Richtung wirkende Bewegung und jeweils den Festkörpern eine in einer Ausförder-Richtung wirkende Bewegung vermittelbar ist. Die getrennten Einzelteile werden entsprechend dieser Förderrichtungen mittels nachgeordneter Förderbauteile übernommen.

Das Konzept sieht vor, dass die Trennung des Erntegutes von den Festkörpern im Bereich der Trennfläche vorteilhaft mittels Schwerkraft, Rückprall- und/oder Luftströmungswirkung(en) erfolgt. Es hat sich gezeigt, dass durch jeweils überlagerte Anregungswirkungen eine besonders effektive Entmischung der Einzelteile einleitbar ist und dabei mit vergleichsweise geringem Energieeinsatz eine hohe Durchsatzleistung erreicht wird.

In dieser Trennphase auf dem Rückhalteelement ist denkbar, dass die sortierten Kartoffeln und/oder die sortierten Festkörper nach deren Ableitung aus dem Bereich der Trennfläche als zusätzlich klassifizierte Teilmengen erfassbar und/oder weiterleitbar sind. Dabei können große und kleine bzw. schwere und leichte Teile jeweils auf vorsortierende Ausleitbänder gelangen.

Mit den oberhalb des Rückhalteelementes bzw. dessen Trennfläche einleitbaren Strömungs- und Anregungsbewegungen wird insgesamt eine turbulent verteilte Trenngüter aufweisende Mischzone definiert. Dies kann vorteilhaft dazu ausgenutzt werden, dass gleichzeitig mit dem im Wesentlichen vertikal zur Trennfläche gerichteten ersten Hubluftstrom und dem zumindest einen - im Wesentlichen parallel zur Trennfläche verlaufenden - Querluftstrom die Trennwirkung des Systems beeinflussbar ist. Unter dem Gesichtspunkt unterschiedlicher Bodenklassen oder variierenden Feuchtegrades des Gemisches sind damit Optimierungen des Trennvorganges mit geringem Aufwand möglich.

Das erfindungsgemäße Anregungskonzept sieht auch vor, dass mittels einer vom Stellorgan mechanisch einleitbaren Schwingbewegung des Rückhalteelementes - zusätzlich zum Hubluftstrom und zum Querluftstrom - eine im Bereich der Mischzone wirksame Anregung des Gemisches erfolgt.

Das in seiner konstruktiven Gestaltung variable Rückhalteelement ist vorteilhaft in Form eines als Förderplatte wirkenden Staubleches ausgebildet. Dieses ist in der Einbaulage, insbesondere in seiner Neigung, einstellbar. Dieses Staublech kann zumindest bereichsweise mit einer rostartigen Struktur versehen sein, derart, dass eine zusätzliche Siebwirkung erreicht ist.

Die optimale Ausrichtung des Staubleches in Bezug auf den über die Fördereinrichtung zugeführten Förderstrom sieht vor, dass das Staublech ein entgegen oder in Zuführrichtung des Gemisches geneigte Einbaulage aufweisen kann. Als vorteilhaft hat sich herausgestellt, dass das Staublech entgegen einer für das Erntegut vorgesehenen Sortierrichtung geneigt eingestellt wird. Neben dieser weitgehend variablen Einstellmöglichkeit ist vorgesehen, dass das Staublech auch in der Gebrauchsphase schwenkbar ausgeführt sein kann. Eine optimale Steuerungsmöglichkeit im Bereich des Staubleches wird dadurch erreicht, dass dieses mit einem als Stellorgan wirkenden Schwingantrieb versehen wird.

Für den Bereich der Festkörper-Abförderung ist vorgesehen, dass das plattenförmige Rückhalteelement hier mit jeweiligen Sternrädern als Förderorgane zusammenwirken kann. Für die geordnete Ableitung der Festkörper ist vorgesehen, dass zumindest im Auslassbereich eine flexible Ableitmatte vorgesehen wird. In deren Nahbereich werden die vergleichsweise leichten Kartoffeln zurückgehalten und von den Sternrädern so erfasst, dass eine Verlagerung in die Sortierrichtung erfolgt. Die vergleichsweise schweren Festkörper überwinden den Widerstand der Ableitmatte und werden damit in die Ausförderrichtung verlagert.

Die Trennvorrichtung ist im Bereich des Rückhalteelementes als eine weitgehend geschlossene Einheit mit kastenförmigen Hüllteilen ausgebildet, die mit einer Gebläseanordnung verbunden sind. Ausgehend von dieser Gebläseanordnung ist ein Zuluftstrom in den Bereich des Rückhalteelementes einförderbar. Die eine Steuerung dieses Zuluftstromes bewirkende Gehäusegruppe ist so ausgeführt, dass vor dem Bereich der Trennstrecke eine Umlenkung in Richtung des unterhalb des Rückhalteelementes verlaufenden Hubluftstromes sowie des in der Mischzone verlaufenden Querluftstromes möglich ist.

Die konstruktive Ausführung dieser Luftführung sieht vor, dass der Zuluftstrom im Bereich unterhalb des Rückhalteelementes und im Bereich hinter der Festkörperabgabe in jeweilige getrennte Leitkanäle einpressbar ist. Dabei wird erreicht, dass aus diesen Leitkanal heraus sowohl der Hubluftstrom als auch der Querluftstrom gezielt in die vorgesehenen Bereiche des Rückhalteelementes eingefördert werden kann. Durch eine entsprechende Luftführung kann die Strömungswirkung im Bereich der als "fluidisches Trennbett" wirkenden Mischzone beeinflusst und ggf. optimiert werden.

Die weitere Ausgestaltung des Rückhalteelementes sieht vor, dass dieses mit einem zumindest bereichsweise entlang der Trennfläche verlaufenden Lockerungsorgan versehen werden kann. Zweckmäßig ist das Lockerungsorgan in Form eines umlaufend im Bereich des Rückhalteelementes verlagerbaren Kratzbodens ausgebildet. Dabei kann eine jeweilige Bewegungsrichtung des Lockerungsorgans eingestellt werden. Ebenso ist denkbar, dass die Geschwindigkeit des Lockerungsorgans veränderbar ist und damit die Anregungsfunktion variiert werden kann.

Das Rückhalteelement ist im Bereich der der Festkörper-Abgabe gegenüberliegenden Erntegut-Abgabe mit einer Überleitwalze versehen. Diese kann in Anpassung an die jeweilige Gebrauchslage des Rückhalteelementes in unterschiedlichen Höhen und/oder Abständen zur "Übergabekante" des Rückhalteelementes positioniert werden.

Weitere Einzelheiten und vorteilhafte Ausgestaltungen der Erfindung ergeben sich aus der nachfolgenden Beschreibung und der Zeichnung, in der ein Ausführungsbeispiel der erfindungsgemäßen Vorrichtung veranschaulicht ist. In der Zeichnung zeigen:
- Fig. 1: eine Vorderansicht der erfindungsgemäßen Trennvorrichtung,
- Fig. 2: eine Seitenansicht der Trennvorrichtung gemäß Fig. 1,
- Fig. 3: eine Draufsicht der Trennvorrichtung gemäß Fig. 1,
- Fig. 4: eine teilweise geschnittene Vorderansicht gemäß einer Linie IV - IV in Fig. 3,
- Fig. 5: eine Schnittdarstellung ähnlich Fig. 4 gemäß einer Linie V - V in Fig. 3,
- Fig. 6: eine vergrößerte Ausschnittsdarstellung gemäß Detail VI in Fig. 5,
- Fig. 7: eine vergrößerte Ausschnittsdarstellung der Vorrichtung im Bereich des Rückhalteelementes mit Kratzboden, und
- Fig. 8: eine Ausschnittsdarstellung ähnlich Fig. 7 mit dem mit Sternrädern zusammenwirkenden Rückhalteelement.

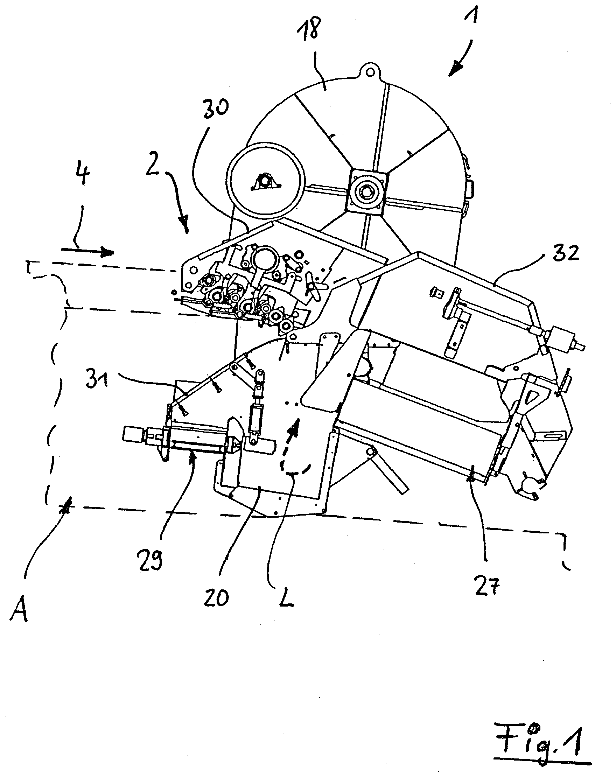

In Fig. 1 ist eine insgesamt mit 1 bezeichnete Trennvorrichtung dargestellt, die in eine allgemein mit A bezeichnete Kartoffelernte- oder Aufbereitungsmaschine integriert werden kann. Dabei kann die Trennvorrichtung 1 als ein weitgehend autarkes Aggregat variabel einsetzbarer Systeme vorgesehen sein.

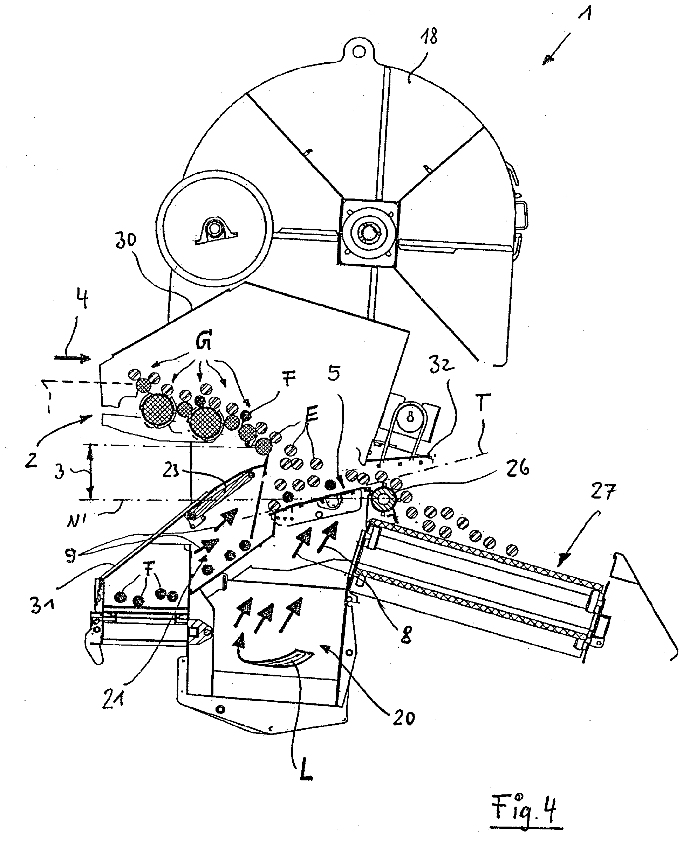

Die Trennvorrichtung 1 ist zum Trennen von Kartoffeln o. dgl. Erntegut E aus einem Gemisch G mit Kluten, Steinen und ähnlichen Festkörpern F vorgesehen. Aus der Zusammenschau von Fig. 1 und Fig. 4 wird deutlich, dass die Trennvorrichtung 1 mit einer das im Wesentlichen kompakte Gemisch G als einen Förderstrom 4 zuführenden Fördereinrichtung 2 versehen ist, von der aus das in den Bereich zumindest einer Fallstufe 3 verlagerte und dabei mittels eines Fördermediums in Form eines in das System integrierten Luftstromes L (Fig. 4) beeinflusste Gemisch G so trennbar ist, dass jeweils zumindest das Erntegut E sowie die Festkörper F als einzelne Trenngüter weiterleitbar und aus der Trennvorrichtung 1 ausleitbar sind.

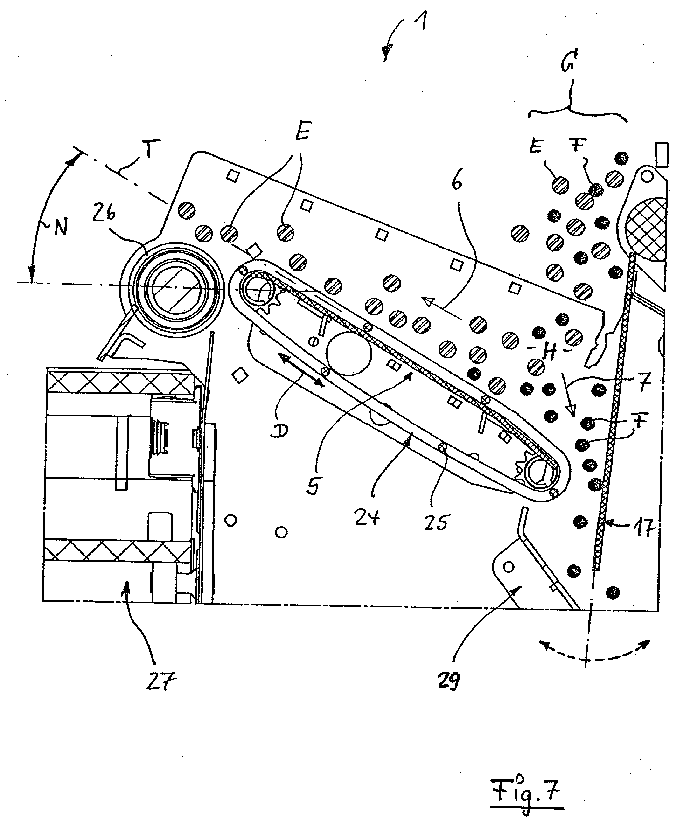

Ausgehend von einer allgemein bekannten Nutzung eines Luftstroms L ist das erfindungsgemäße Konzept der Trennvorrichtung 1 darauf gerichtet, dass nunmehr nachfolgend der eine Auflockerung des Gemisches G bewirkenden Fallstufe 3 ein den fallenden Trenngütern E, F entgegen gerichtetes und mit dem zumindest einen Luftstrom L funktional kombiniertes Rückhalteelement 5 vorgesehen ist. Dieses Rückhalteelement 5 wirkt mit dem Luftstrom L als Funktionseinheit derart zusammen, dass - in einem weitgehend geschlossenen System - ausgehend von der Oberseite des Rückhalteelementes 5 als jeweils sortierte Einzelteile zumindest das Erntegut E und die Festkörper F in einer jeweiligen im Wesentlichen entgegengesetzt verlaufenden Förderrichtung 6 bzw. 7 (Fig. 7) getrennt weiterleitbar sind.

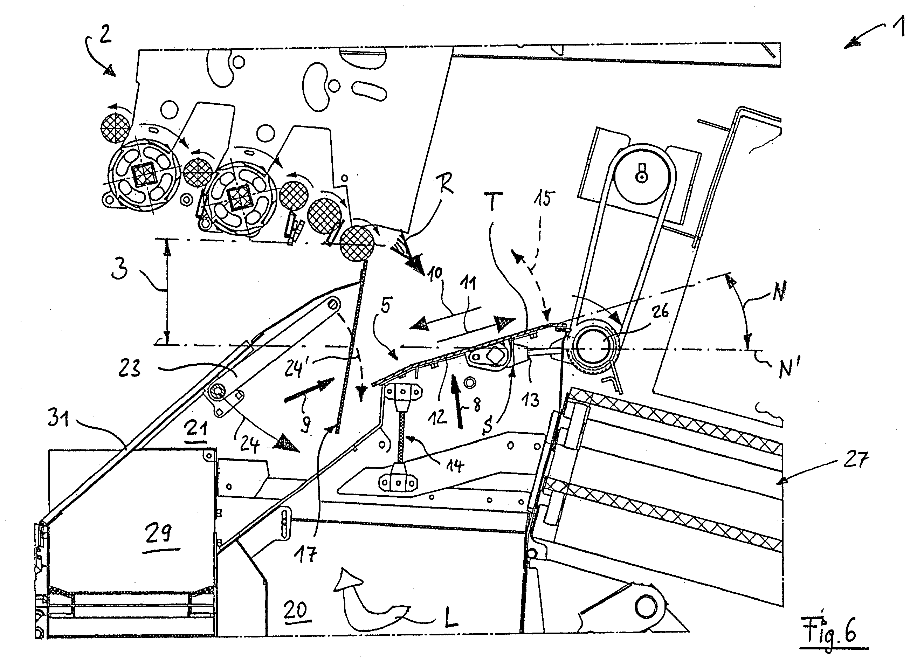

Der kompakte Aufbau dieser Trenneinheit sieht vor, dass im Bereich des Rückhalteelementes 5 auch mehrere der "primären" Luftströme L (nicht dargestellt) vorgesehen sein können. Eine weitere Steigerung der Effektivität des mit geringem Energieeinsatz realisierbaren Trennprozesses kann dadurch erreicht werden, dass das Rückhalteelement 5 mit zumindest einem dessen Lage und/oder Bewegung beeinflussenden Stellorgan S (Fig. 6) versehen wird.

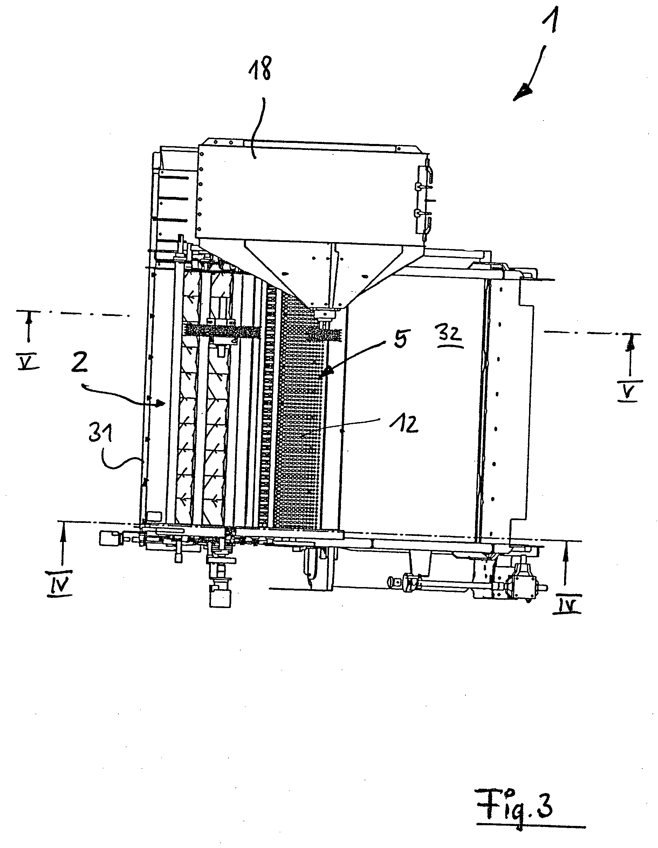

Aus der Zusammenschau von Fig. 3 und Fig. 4 wird deutlich, dass oberhalb des zumindest bereichsweise vom Luftstrom L durchströmbaren Rückhalteelementes 5 eine zumindest phasenweise sowohl das Erntegut E als auch die Festkörper F in einem angerechten Lockerungszustand (Fig. 4) untergreifende Trennfläche T (Strich-Punkt-Linie, Fig. 4) definiert ist. Eine besonders effiziente Ausführung der Trennvorrichtung 1 wird dadurch erreicht, dass im Bereich des Rückhalteelementes 5 zumindest oberhalb der Trennfläche T zwei mit unterschiedlichen Wirkrichtungen auf das Erntegut E und die Festkörper F ausrichtbare Luftströme in Form eines Hubluftstromes 8 und eines Querluftstromes 9 vorgesehen sind.

Aus der Darstellung gemäß Fig. 4 wird deutlich, dass der Hublulftstrom 8 und der Querluftstrom 9 als jeweilige Teilluftströme des Basisluftstromes L ausgeführt sind. Ebenso ist denkbar, zwei unabhängig von einander wirkende Luftzuführungen (nicht dargestellt) vorzusehen und mit diesen den Hublufstrom 8 und den Querluftstrom 9 zu erzeugen.

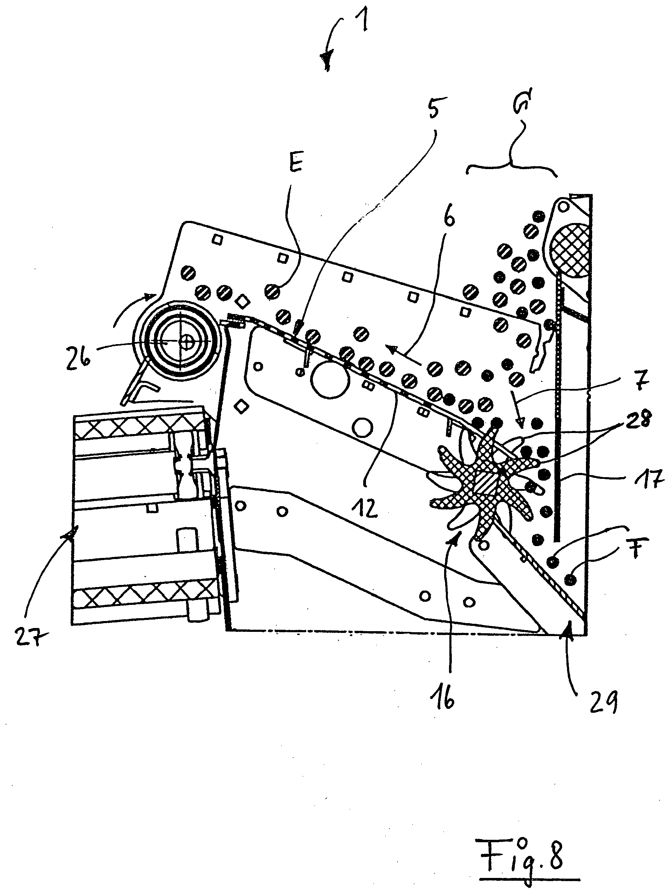

Ausgehend von dem vorbeschriebenen und in Fig. 4 im Bereich der Fallstufe 3 dargestellten Lockerungszustand des Gemisches G ist das System so einstellbar, dass mittels des in Fig. 7 und Fig. 8 vergrößert dargestellten Rückhalteelementes 5 jeweils dem Erntegut E eine zumindest in eine Sortier-Richtung wirkende Bewegung (Förderrichtung 6) und jeweils den Festkörpern F eine in einer Ausförder-Richtung wirkende Bewegung (Förderrichtung 7) vermittelbar ist.

In dieser Wirkphase der Vorrichtung 1 ist das Rückhalteelement 5 so ausgerichtet, dass die Trennung des Erntegutes E von den Festkörpern F im Bereich der Trennfläche T mittels Schwerkraft-, Rückprall- und/oder Luftströmungswirkung(en) eingeleitet werden kann. Es hat sich gezeigt, dass durch jeweils überlagerte Anregungswirkungen eine Entmischung effizient einleitbar ist und aus dem Gemisch G heraus eine weitgehende "Sortierung" der Einzelteile E und F erfolgt (Fig. 7).

In dieser Phase der getrennten Weiterleitung ist auch denkbar, dass die sortierten Kartoffeln E und/oder die sortierten Festkörper F nach deren Ableitung aus dem Bereich der Trennfläche T zusätzlich als klassifizierbare Teilmengen erfasst und/oder weitergeleitet werden (nicht dargestellt).

Bereits die Realisierung der Trennvorrichtung 1 als ein Prototyp hat gezeigt, dass oberhalb des Rückhalteelementes 5 bzw. dessen Trennfläche T eine turbulent verteilte Trenngüter aufweisende Mischzone nach Art eines "fluidischen Trennbettes" definiert ist. In dieser Zone kann das "angeregte Gemisch" gleichzeitig mit dem im Wesentlichen vertikal zur Trennfläche T gerichteten ersten Hubluftstrom 8 und dem zumindest einen im Wesentlichen parallel zur Trennfläche T verlaufenden Querluftstrom 9 erfasst werden. Durch variable Verfahrensparameter kann diese Trennwirkung des Systems optimal eingestellt oder während des Trennvorganges beeinflusst werden.

Eine vergleichsweise einfache Verbesserung dieses Anregungszustandes kann dadurch erreicht werden, dass mittels einer vom Stellorgan S eingeleiteten Schwingbewegung 10, 11 (Fig. 6) des Rückhalteelementes 5 eine zusätzlich zum Hubluftstrom 8 und zum Querluftstrom 9 im Bereich der Trennfläche T wirksame Anregung des Gemisches G wirksam wird. Aus der Zusammenschau von Fig. 3 und Fig. 6 wird deutlich, dass das Rückhalteelement 5 in Form in seiner Neigung N einstellbaren Staubleches 12 ausgebildet ist.

Aus der Draufsicht gemäß Fig. 3 wird auch deutlich, dass das Staublech 12 zumindest bereichsweise eine rostartige Struktur mit Durchlassöffnungen aufweist.

Die konstruktive Anordnung dieses Staubleches 12 ist weitgehend variabel ausführbar. Dabei sind jeweilige Einbaulagen denkbar sind, die entweder entgegen oder in der Zuführrichtung R (Fig. 6) des Gemisches G geneigt sein können. In vorteilhafter Ausführung ist vorgesehen, dass das Staublech 12 (ausgehend von der Zuführrichtung R, Fig. 6) entgegen einer für das Erntegut E vorgesehenen Sortier-Richtung (Förderrichtung 6) geneigt eingestellt wird (Neigung N). Diese Einstellung des Systems ist auch bei den Ausführungsformen gemäß Fig. 7 und Fig. 8 vorgesehen.

Für eine funktionale Verbesserung der zur Trennung erforderlichen Gemisch-Anregung ist vorgesehen, dass das Staublech 12 auch in der Gebrauchslage schwenk- bzw. schubbeweglich abgestützt sein kann. Dazu ist das Staublech 12 insbesondere mit einem als das Stellorgan S wirkenden Schwingantrieb versehen. Dieser greift mittels eines einen Exenterantrieb (nicht dargestellt) aufweisenden Antriebsgestänges 13 an der Unterseite des Staubleches 12 an. Andererseits ist das Staublech 12 über eine Schwinge 14 so am Maschinengestell gehalten, dass die in Fig. 6 dargestellten Schwingbewegungen (Pfeil 10 und 11) in translatorischen Bewegungsrichtungen bezüglich der Trennfläche T möglich sind. Ebenso ist denkbar, dass im Bereich des Stellorgans S ein Antrieb vorgesehen wird, mit dem radiale Schwingbewegungen (Pfeil 15) um einen Schwenkpunkt (nicht dargestellt) des Staublechs 12 ausführbar sind.

Aus einer Zusammenschau von Fig. 4 und Fig. 8 wird eine konstruktive Weiterbildung des Systems deutlich, wobei das Rückhalteelement 5 zumindest im Bereich der Festkörper-Abförderung mit jeweiligen Sternrädern 16 als zusätzliche Brems- und Förderorgane versehen ist. Im Bereich dieser Sternräder 16 kann eine zusätzliche Führung für die hier ankommenden Einzelteile F dadurch erreicht werden, dass eine insbesondere flexible Ableitmatte 17 einen vorgelagerten "Sammelraum" H begrenzt. Aus dieser Zone heraus können die vergleichsweise leichten Kartoffeln E in Sortier-Richtung 6 auf das Rückhalteelement 5 zurückbefördert werden. Die vergleichsweise schwereren Steine F werden auf eine Ableitbaugruppe 29 abgefördert.

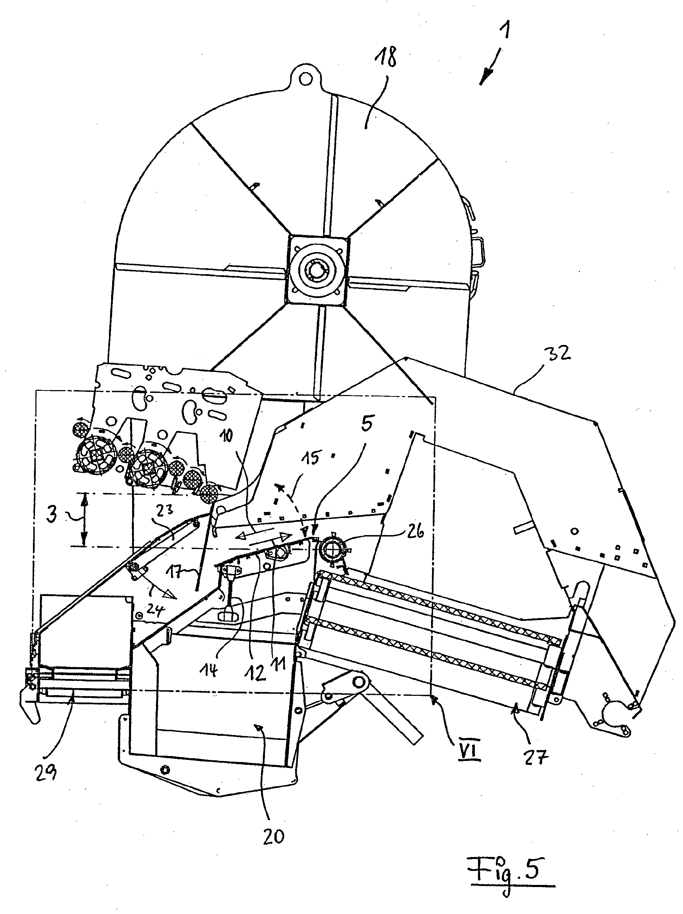

Die Zusammenschau des Systems gemäß den Darstellungen in Fig. 1 bis Fig. 5 verdeutlicht, dass die ein autarkes Aggregat bildende Trennvorrichtung 1 von einer weitgehend geschlossenen, haubenförmig ausgebildeten Gebläseanordnung 18 ausgeht. Wie bereits dargestellt, wird dabei der Zuluftstrom L von einem Gebläse erzeugt, von diesem aus im Bereich der Trennstrecke T in Richtung des vertikalen Hubluftstromes 8 sowie des Querluftstromes 9 umgelenkt und damit in die "Entmischungszone" des Rückhalteelementes 5 eingefördert.

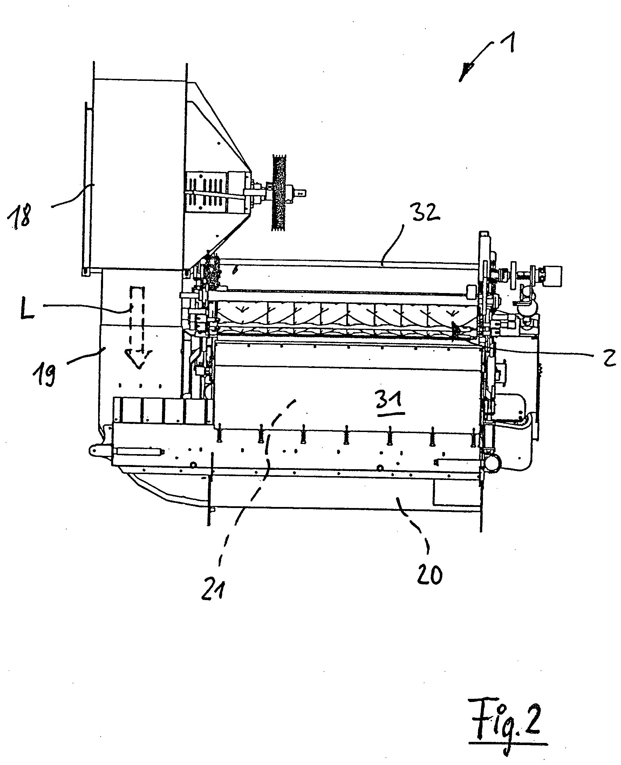

Ausgehend von der Gebläseanordnung 18 ist ein Zuführkanal 19 (Fig. 2) vorgesehen, von dem aus der Luftstrom L in jeweilige Leitkanäle 20 und 21 (Fig. 4) so einpressbar ist, dass die bereits erörterten Teilluftströme im Bereich des Hubluftstromes 8 und des Querluftstromes 9 erzeugt werden. Eine gehäuseartige Konstruktion dieser Leitkanäle 20 und 21 ermöglicht in deren Innenraum eine variable Gestaltung mit zusätzlichen Steuer- und Umlenkteilen, wobei eine Schwenkplatte 23 (Fig. 6) beispielhaft in jeweilige durch Pfeile 24, 24' dargestellte Leitstellungen verlagerbar sein kann. Ebenso ist denkbar, zusätzliche Düsen o. dgl. den Luftstrom L aufnehmende Teile in die Gehäusekontur zu integrieren, so dass ein gerichteter Eintrag von Teilluftströmen in die Mischzone oberhalb des Rückhalteelementes 5 möglich und für den Trennprozess nutzbar ist (nicht dargestellt).

Aus den Darstellungen wird deutlich, dass das System mittels jeweiliger Haubenteile 30, 31, 32 (Fig. 1, Fig. 4) weitgehend geschlossen ausführbar ist und damit in einer Betriebsphase der Vorrichtung 1 jeweilige Staubteile o. dgl. Bodenstrukturen innerhalb des Systems gebunden werden.

Ausgehend von der in Fig. 1 bis Fig. 6 dargestellten Basisausführung des Systems ist in Fig. 7 eine zweite Ausführung mit Bauteilen im Bereich des Rückhalteelementes 5 dargestellt, so dass dessen funktionale Wirkung verbessert werden kann. Dabei wird deutlich, dass das Rückhalteelement 5 mit einem diesen zumindest bereichsweise entlang der Trennfläche T zugeordneten Lockerungsorgan 24 versehen ist. In vorteilhafter Ausführung ist vorgesehen, dass das Lockerungsorgan 24 in Form eines in Pfeilrichtung D umlaufend verlagerbaren Kratzbodens 25 ausgebildet ist. Zur Anpassung an variable Einsatzbedingungen ist vorgesehen, dass die jeweilige Bewegungsrichtung D und/oder die Geschwindigkeit des Lockerungsorgans 24 weitgehend variabel einstellbar ist/sind.

Für die Abförderung des Erntegutes E vom Rückhalteelement 5 ist im Bereich der Erntegut-Abgabe vorzugsweise eine Überleitwalze 26 vorgesehen, von der aus das Erntegut E auf ein dieses ableitendes Förderorgan 27 übergeben wird.

In Fig. 8 ist das System im Bereich des Rückhalteelementes 5 mit den Siebsternen 16 dargestellt, wobei diese im Bereich der Ableitmatte 17 die aufgelockerten Einzelteile E und F nach Art einer "Siebsternschleuse" beeinflussen können. Die vorzugsweise in Ausförderrichtung 6 des Erntegutes E drehenden Siebsterne 16 durchgreifen dabei die Rückhalteplatte 5 mit jeweiligen Fingerspitzen 28, so dass von diesen aus die Kartoffeln E in Förderrichtung 6 und die Steine F - aufgrund ihres Gewichtes - in Förderrichtung 7 abgeleitet werden.

Das vorbeschriebene System mit einer Rückhalteelement-Luft-Anregungskombination ist so aufgebaut, dass insbesondere im Bereich des Rückhalteelementes 5 unterschiedliche der vorbeschriebenen Baugruppen variabel ausgeführt und angeordnet werden können. Insbesondere können wahlweise unterschiedliche Kratzböden 24 und/oder Siebsterne 16 mit der variabel gestaltbaren Luftzuführung L zusammenwirken, wobei auch die Anregung des Rückhalteelementes 5 mit dem "mechanischen" Stellorgan S konstruktiv anpassbar ist. Ebenso ist denkbar, das System mit mehreren Rückhalteelementen zu kombinieren oder die Luftzuführung nach Art einer Saug-Luftanlage in das Gehäusekonzept des Trennbereiches zu integrieren (nicht dargestellt).

## Patentansprüche

1. Trennvorrichtung für eine Kartoffelerntemaschine oder eine Aufbereitungsmaschine (A) zum Trennen von Kartoffeln o. dgl. Erntegut (E) aus einem Gemisch (G) mit Kluten, Steinen und ähnlichen Festkörpern (F), mit einer das im Wesentlichen kompakte Gemisch (G) als einen Förderstrom (4) zuführenden Fördereinrichtung (2), von der aus das in den Bereich zumindest einer Fallstufe (3) verlagerte und dabei mittels eines Fördermediums in Form eines Luftstromes (L) beeinflusste Gemisch (G) so trennbar ist, dass jeweils zumindest das Erntegut (E) sowie die Festkörper (F) als einzelne Trenngüter weiterleitbar und aus der Trennvorrichtung (1) ausleitbar sind, , wobei nachfolgend der eine Auflockerung des Gemisches (G) bewirkenden Fallstufe (3) zumindest ein den fallenden Trenngütern (E, F) entgegen gerichtetes und mit dem zumindest einen Luftstrom (L) zusammenwirkendes Rückhalteelement (5) vorgesehen ist, derart, dass von diesem ausgehend als jeweils sortierte Einzelteile zumindest das Erntegut (E) und die Festkörper (F) in einer jeweiligen im Wesentlichen entgegengesetzt verlaufenden Förderrichtung (6, 7) getrennt weiterleitbar sind, wobei der zumindest eine Luftstrom als Hubluftstrom (8) das Rückhalteelement (5) und dessen obere Trennfläche (T) durchströmt, **dadurch gekennzeichnet, dass** ein weiterer Luftstrom oberhalb der Trennfläche (T) und im Wesentlichen parallel zur Trennfläche (T) als Querluftstrom (9) vorgesehen ist.

2. Trennvorrichtung nach Anspruch 1 , **dadurch gekennzeichnet, dass** das Rückhalteelement (5) mit zumindest einem dessen Lage und/oder Bewegung beeinflussenden Stellorgan (S) versehen ist.

3. Trennvorrichtung nach einem der Ansprüche 1 oder 2, **dadurch gekennzeichnet, dass** mittels des Rückhalteelementes (5) jeweils dem Erntegut (E) eine zumindest in die eine Sortier-Richtung wirkende Bewegung (6) und jeweils den Festkörpern (F) eine in einer Ausförder-Richtung wirkende Bewegung (7) vermittelbar ist.

4. Trennvorrichtung nach einem der Ansprüche 1 bis 3, **dadurch gekennzeichnet, dass** die Trennung des Erntegutes (E) von den Festkörpern (F) im Bereich der Trennfläche (T) mittels Schwerkraft-, Rückprall- und/oder Luftströmungswirkung(en) erfolgt.

5. Trennvorrichtung nach einem der Ansprüche 1 bis 4, **dadurch gekennzeichnet, dass** mittels einer vom Stellorgan (S) mechanisch einleitbaren Schwingbewegung (10, 11) des Rückhalteelementes (5) eine zusätzlich zum Hubluftstrom (8) und Querluftstrom (9) im Bereich der Mischzone wirksame Anregung des Gemisches (G) vorgesehen ist.

6. Trennvorrichtung nach einem der Ansprüche 1 bis 5, **dadurch gekennzeichnet, dass** das Rückhalteelement (5) in Form eines in seiner Neigung (N) einstellbaren Staubleches (12)ausgebildet ist und das Staublech (12) zumindest bereichsweise eine rostartige Struktur aufweist.

7. Trennvorrichtung nach Anspruch 6, **dadurch gekennzeichnet, dass** das Staublech (12) ausgehend von einer Horizontallage (N') eine entgegen der Zuführrichtung (R) des Gemisches (G) geneigte Einbaulage (Neigung N) oder eine in Zuführrichtung (R) geneigte Einbaulage aufweist, derart, dass das Staublech (12) entgegen einer für das Erntegut (E) vorgesehenen Sortierrichtung (6) geneigt einstellbar ist.

8. Trennvorrichtung nach Anspruch 6 oder 7, **dadurch gekennzeichnet, dass** das Staublech (12) schwenkbar und/oder verschiebbar (10, 11, 15) ist.

9. Trennvorrichtung nach einem der Ansprüche 5 bis 8, **dadurch gekennzeichnet, dass** das Staublech (12) mit einem als das Stellorgan (S) wirkenden Schwingantrieb (13, 14) versehen ist.

10. Trennvorrichtung nach einem der Ansprüche 1 bis 9, **dadurch gekennzeichnet, dass** das Rückhalteelement (5) zumindest im Bereich der Festkörper-Abförderung mit jeweiligen Sternrädern (16) als Förderorgane zusammenwirkt.

11. Trennvorrichtung nach Anspruch 10, **dadurch gekennzeichnet, dass** zumindest im Bereich der Sternräder (16) eine flexible Ableitmatte (17) vorgesehen ist.

12. Trennvorrichtung nach einem der Ansprüche 1 bis 15, **dadurch gekennzeichnet, dass** ein von einer Gebläseanordnung (18) ausgehender Zuluftstrom (L) in den Bereich des Rückhalteelementes (5) einförderbar und dabei vor dem Bereich der Trennfläche (T) in Richtung des vertikalen Hubluftstromes (8) sowie des Querluftstromes (9) umlenkbar ist.

13. Trennvorrichtung nach Anspruch 12, **dadurch gekennzeichnet, dass** der Zuluftstrom (L) im Bereich unterhalb des Rückhalteelementes (5) und im Bereich hinter der Festkörperabgabe in jeweilige getrennte Leitkanäle (20, 21) einpressbar ist, derart, dass aus diesen Leitkanälen (20,21) heraus sowohl der Hubluftstrom (8) als auch der Querluftstrom (9) gezielt in den Bereich des Rückhalteelementes (5) ausförderbar sind.

14. Trennvorrichtung nach Anspruch 1 bis 13, **dadurch gekennzeichnet, dass** das Rückhalteelement (5) mit einem diesem zumindest bereichsweise entlang der Trennfläche (T) zugeordneten Lockerungsorgan (24) versehen ist.

15. Trennvorrichtung nach Anspruch 14, **dadurch gekennzeichnet, dass** das Lockerungsorgan (24) in Form eines umlaufend verlagerbaren Kratzbodens (25) ausgebildet ist.

16. Trennvorrichtung nach Anspruch 10 oder 11, **dadurch gekennzeichnet, dass** eine jeweilige Bewegungsrichtung (D) des Lockerungsorgans (24) einstellbar ist.

17. Trennvorrichtung nach einem der Ansprüche 14 bis 16, **dadurch gekennzeichnet, dass** die Geschwindigkeit des Lockerungsorgans (24) veränderbar ist.

18. Trennvorrichtung nach Anspruch 17, **dadurch gekennzeichnet, dass** das Rückhalteelement (5) im Bereich der Erntegut-Abgabe mit einer Überleitwalze (26) versehen ist.

## Claims

1. Separating device for a potato harvesting machine or a processing machine (A) for separating potatoes or similar harvested crops (E) from a mixture (G) of clods, stones and similar solid bodies (F), said device comprising a conveying device (2), which feeds the substantially dense mixture (G) as a conveyed flow (4), from which conveying device the mixture (G), which is moved into the region of at least one drop stage (3) and, in the process, is influenced by means of a conveying medium in the form of a stream (L) of air, can be separated such that, in each case, at least the harvested crops (E) and the solid bodies (F) can be passed forward and guided out of the separating device (1) as individual separated items, at least one retaining element (5), which is oriented counter to the falling separated items (E, F) and cooperates with the at least one stream (L) of air, being provided downstream of the drop stage (3) that causes the mixture (G) to break up, such that, starting from this retaining element, at least the harvested crops (E) and the solid bodies (F), in the form of respectively sorted individual parts, can be passed forward so as to be separated in a conveying direction (6, 7) that runs in substantially the opposite direction, the at least one stream of air flowing through the retaining element (5) and the upper separating surface (T) thereof as a stream (8) of lifting air, **characterised in that** an additional stream of air is provided above the separating surface (T), and substantially in parallel with the separating surface (T), as a transverse stream (9) of air.

2. Separating device according to claim 1, **characterised in that** the retaining element (5) is provided with at least one positioning member (S) which influences the position and/or movement thereof.

3. Separating device according to either claim 1 or claim 2, **characterised in that**, by means of the retaining element (5), a movement (6) which acts at least in the sorting direction can be imparted to the harvested crops (E) in each case, and a movement (7) which acts in a conveying-out direction can be imparted to the solid bodies (F) in each case.

4. Separating device according to any of claims 1 to 3, **characterised in that** the harvested crops (E) are separated from the solid bodies (F) in the region of the separating surface (T) by means of the effect(s) of gravity, rebound and/or airflow.

5. Separating device according to any of claims 1 to 4, **characterised in that** stimulation of the mixture (G), which acts in the region of the mixing zone in addition to the stream (8) of lifting air and the transverse stream (9) of air, is provided by means of an oscillating movement (10, 11) of the retaining element (5) that can be mechanically introduced by the positioning member (S).

6. Separating device according to any of claims 1 to 5, **characterised in that** the retaining element (5) is in the form of a baffle plate (12), the inclination (N) of which can be adjusted, and the baffle plate (12) has a grate-like structure, at least in regions.

7. Separating device according to claim 6, **characterised in that**, starting from a horizontal position (N'), the baffle plate (12) has a fitted position (inclination N) that is inclined counter to the feed direction (R) of the mixture (G) or has a fitted position that is inclined in the feed direction (R), such that the baffle plate (12) can be adjusted so as to be inclined counter to a sorting direction (6) provided for the harvested crops (E).

8. Separating device according to either claim 6 or claim 7, **characterised in that** the baffle plate (12) is pivotable and/or displaceable (10, 11, 15).

9. Separating device according to any of claims 5 to 8, **characterised in that** the baffle plate (12) is provided with an oscillating drive (13, 14) that acts as the positioning member (S).

10. Separating device according to any of claims 1 to 9, **characterised in that** the retaining element (5) cooperates with star wheels (16) in form of conveying members, at least in the region in which the solid bodies are conveyed away.

11. Separating device according to claim 10, **characterised in that** a flexible diversion mat (17) is provided at least in the region of the star wheels (16).

12. Separating device according to any of claims 1 to 15, **characterised in that** an inlet air stream (L), originating from a fan arrangement (18), can be conveyed into the region of the retaining element (5) and, in the process, can be deflected, upstream of the region of the separating surface (T), in the direction of the vertical stream (8) of lifting air and the transverse stream (9) of air.

13. Separating device according to claim 12, **characterised in that**, in the region underneath the retaining element (5) and in the region downstream of where the solid bodies are discharged, the inlet air stream (L) can be injected into separate guide channels (20, 21) such that both the stream (8) of lifting air and the transverse air stream (9) can be conveyed out of these guide channels (20, 21) in a targeted manner into the region of the retaining element (5).

14. Separating device according to claims 1 to 13, **characterised in that** the retaining element (5) is provided with a loosening member (24) assigned at least in regions along the separating surface (T).

15. Separating device according to claim 14, **characterised in that** the loosening member (24) is in the form of a rotationally movable scraper floor (25).

16. Separating device according to either claim 10 or claim 11, **characterised in that** a movement direction (D) of the loosening member (24) can be adjusted.

17. Separating device according to any of claims 14 to 16, **characterised in that** the speed of the loosening member (24) can be changed.

18. Separating device according to claim 17, **characterised in that** the retaining element (5) is provided with a transfer roller (26) in the region in which the harvested crops are discharged.

## Revendications

1. Dispositif de séparation destiné à une récolteuse de pommes de terre ou une machine de traitement (A) destinée à séparer les pommes de terre ou d'un produit récolté analogue (E) d'un mélange (G) comportant des mottes, des cailloux et des corps solides analogues (F), le dispositif de séparation comprenant un convoyeur (2) qui achemine le mélange sensiblement compact (G) sous la forme d'un flux de transport (4) et duquel le mélange (G), déplacé jusque dans la zone d'au moins un étage de chute (3) où il est soumis à l'influencé d'un milieu de transport se présentant sous la forme d'un flux d'air (L), peut être séparé de telle sorte qu'au moins le produit récolté (E) et les corps solides (F) puissent être emportés sous la forme de produits séparés individuels et peuvent puissent être déviés du dispositif de séparation (1), l'étage de chute (3) qui provoque une désagrégation du mélange (G) étant suivi d'au moins un élément de retenue (5), orienté à l'opposé des produits séparés (E, F) qui tombent et coopérant avec l'au moins un flux d'air (L), de telle sorte que, à partir de cet élément de retenue, au moins le produit récolté (E) et les corps solides (F) puissent être emportés séparément sous la forme d'éléments individuels triés dans une direction de transport (6, 7) sensiblement opposée, l'au moins un flux d'air sous la forme d'un flux d'air d'élévation (8) traversant l'élément de retenue (5) et sa surface de séparation supérieure (T), **caractérisé en ce qu'**un autre flux d'air est prévu sous la forme d'un flux d'air transversal (9) au-dessus de la surface de séparation (T) et sensiblement parallèlement à la surface de séparation (T).

2. Dispositif de séparation selon la revendication 1, **caractérisé en ce que** l'élément de retenue (5) est pourvu d'au moins un actionneur (S) influant sur la position et/ou le mouvement de celui-ci.

3. Dispositif de séparation selon l'une des revendications 1 ou 2, **caractérisé en ce que**, au moyen de l'élément de retenue (5), un mouvement agissant au moins dans un sens de tri (6) peut être communiqué au produit récolté (E) et un mouvement (7) agissant dans un sens de transport peut être communiqué aux corps solides (F).

4. Dispositif de séparation selon l'une des revendications 1 à 3, **caractérisé en ce que** la séparation du produit récolté (E) est effectuée par les corps solides (F) dans la zone de la surface de séparation (T) par au moins un effet de la gravité, d'un rebondissement et/ou d'une circulation d'air.

5. Dispositif de séparation selon l'une des revendications 1 à 4, **caractérisé en ce qu'**une excitation du mélange (G), laquelle agit au niveau de la zone de mélange en plus du flux d'air d'élévation (8) et du flux d'air transversal (9), est générée par un mouvement oscillant (10, 11), introduit mécaniquement par l'actionneur (S), de l'élément de retenue (5) .

6. Dispositif de séparation selon l'une des revendications 1 à 5, **caractérisé en ce que** l'élément de retenue (5) se présente sous la forme d'une tôle de rétention (12) réglable en inclinaison (N) et **en ce que** la tôle de rétention (12) présente au moins en partie une structure en forme de grille.

7. Dispositif de séparation selon la revendication 6, **caractérisé en ce que** la tôle de rétention (12) possède, à partir d'une position horizontale (N'), une position de montage inclinée à l'opposé du sens d'acheminement (R) du mélange (G) (inclinaison N) ou une position de montage inclinée dans le sens d'acheminement (R) de telle que la tôle de rétention (12) soit inclinable par réglage à l'opposé d'un sens de tri (6) prévu pour le produit récolté (E).

8. Dispositif de séparation selon la revendication 6 ou 7, **caractérisé en ce que** la tôle de rétention (12) est pivotante et/ou coulissante (10,11, 15).

9. Dispositif de séparation selon l'une des revendications 5 à 8, **caractérisé en ce que** la tôle de rétention (12) est pourvue d'un entraînement en oscillation (13, 14) agissant comme l'actionneur (S).

10. Dispositif de séparation selon l'une des revendications 1 à 9, **caractérisé en ce que** l'élément de retenue (5) coopère, au moins dans la zone de transport de corps solides, avec roues en étoile respectives (16) se présentant sous la forme d'éléments de transport.

11. Dispositif de séparation selon la revendication 10, **caractérisé en ce qu'**un tapis de déviation flexible (17) est prévu au moins dans la zone des roues en étoile (16).

12. Dispositif de séparation selon l'une des revendications 1 à 15, **caractérisé en ce qu'**un afflux d'air (L), provenant d'un ensemble formant ventilateur (18), peut être injecté dans la zone de l'élément de retenue (5) et peut être dévié en direction du flux d'air d'élévation vertical (8) et du flux d'air transversal (9) avant la zone de la surface de séparation (T).

13. Dispositif de séparation selon la revendication 12, **caractérisé en ce que** l'afflux d'air (L) peut être injecté dans des conduits de guidage séparés respectifs (20, 21) dans la zone située au-dessous de l'élément de retenue (5) et dans la zone située derrière la section de délivrance de corps solides de telle sorte que le flux d'air d'élévation (8) et le flux d'air transversal (9) peuvent être évacués de ces conduits de guidage (20, 21) de manière ciblée jusque dans la zone de l'élément de retenue (5).

14. Dispositif de séparation selon l'une des revendications 1 à 13, **caractérisé en ce que** l'élément de retenue (5) est pourvu d'un élément de désagrégation (24) qui lui est associé au moins en partie le long de la surface de séparation (T).

15. Dispositif de séparation selon la revendication 14, **caractérisé en ce que** l'élément de désagrégation (24) est conçu sous la forme d'un fond de raclage (25) déplaçable en rotation.

16. Dispositif de séparation selon la revendication 10 ou 11, **caractérisé en ce qu'**une direction de déplacement respective (D) de l'élément de désagrégation (24) est réglable.

17. Dispositif de séparation selon l'une des revendications 14 à 16, **caractérisé en ce que** la vitesse de l'élément de désagrégation (24) peut être modifiée.

18. Dispositif de séparation selon la revendication 17, **caractérisé en ce que** l'élément de retenue (5) est pourvu d'un rouleau de transfert (26) dans la zone de délivrance du produit récolté.
